(19) Europäisches Patentamt
European Patent Office
Office européen des brevets

(11) EP 0 770 859 A1

(12) EUROPÄISCHE PATENTANMELDUNG

(43) Veröffentlichungstag:
02.05.1997 Patentblatt 1997/18

(51) Int. Cl.$^6$: **G01F 25/00**, G01F 23/296,
G01F 23/284

(21) Anmeldenummer: 95116970.5

(22) Anmeldetag: 27.10.1995

(84) Benannte Vertragsstaaten:
AT BE CH DE DK ES FR GB GR IE IT LI LU MC NL PT SE

(71) Anmelder: ENDRESS + HAUSER GMBH + CO.
D-79689 Maulburg (DE)

(72) Erfinder: **Schmidt, Hartmut Dipl.-Ing.**
D-79576 Weil am Rhein (DE)

(74) Vertreter: **Leiser, Gottfried, Dipl.-Ing.**
**Prinz & Partner,**
**Manzingerweg 7**
**81241 München (DE)**

(54) **Verfahren zum Abgleich bei der Füllstandsmessung**

(57) Die Messung des Füllstands in einem Behälter erfolgt mittels eines Sensors, der oberhalb des höchsten vorkommenden Füllstands angebracht ist und den Abstand zu der Oberfläche des Füllguts im Behälter mißt. Eine Auswerteeinrichtung berechnet aus dem vom Sensor gemessenen Abstand und der Leerdistanz die Füllhöhe. Das Füllgutvolumen wird aus dem in der Auswerteeinrichtung gespeicherten Zusammenhang zwischen Füllhöhe und Füllgutvolumen bestimmt. Zum Abgleich eines Sensors bei unbekannter Leerdistanz ohne völlige Entleerung des Behälters wird die laufende Befüllung oder Entleerung des Behälters unterbrochen und das aktuelle Füllgutvolumen festgehalten. Mit dem abzugleichenden Sensor wird eine Abstandsmessung durchgeführt, und das aktuelle Füllgutvolumen wird in die Auswerteeinrichtung eingegeben. Die Auswerteeinrichtung bestimmt aufgrund des gespeicherten Zusammenhangs zwischen Füllhöhe und Füllgutvolumen die zu dem eingegebenen Füllgutvolumen gehörige Füllhöhe und berechnet die Leerdistanz als Summe aus dieser Füllhöhe und dem gemessenen Abstand. Auf diese Weise ist ein Abgleich an einem einzigen Abgleichpunkt ohne Änderung der Befüllung des Behälters möglich.

## Beschreibung

Die Erfindung betrifft ein Verfahren zum Abgleich bei der Füllstandsmessung mittels eines Sensors, der oberhalb des höchsten vorkommenden Füllstands angebracht ist und den Abstand zu der Oberfläche des Füllguts im Behälter mißt, und mittels einer Auswerteeinrichtung, die aus dem vom Sensor gemessenen Abstand und der Leerdistanz die Füllhöhe berechnet und aus dem in der Auswerteeinrichtung gespeicherten Zusammenhang zwischen Füllhöhe und Füllgutvolumen das Füllgutvolumen bestimmt und anzeigt.

Die "Leerdistanz" ist dabei der Abstand, den der Sensor bei leerem Behälter messen würde.

Diese Art der Füllstandsmessung wird beispielsweise von den nach dem Rückstrahlprinzip arbeitenden Füllstandsmeßgeräten durchgeführt, bei denen der Sensor Ultraschallwellen oder elektromagnetische Wellen zur Oberfläche des Füllguts aussendet und die an der Füllgutoberfläche reflektierten Echowellen empfängt, wobei die Auswerteeinrichtung den Abstand zwischen dem Sensor und der Füllgutoberfläche aus der Laufzeit der Wellen ermittelt. Ein anderes Beispiel für Füllstandsmeßgeräte, die den Abstand zwischen einem oberhalb des höchsten vorkommenden Füllstands angeordneten Sensor und der Füllgutoberfläche messen, sind mechanische Geräte, die ein Lot auf die Füllgutoberfläche absenken.

Die richtige Ermittlung und Anzeige des Füllstands in Form des Füllgutvolumens setzt bei dieser Art der Füllstandsmessung voraus, daß beim Einbau des Sensors die Leerdistanz genau erfaßt und in der Auswerteeinrichtung abgespeichert wird und ein Abgleich der Füllstandsmeßanordnung vorgenommen wird. Bisher war es üblich, den Abgleich an mindestens zwei verschiedenen Punkten vorzunehmen. Diese Punkte sind in der Regel derjenige, an dem der Behälter völlig entleert ist, und derjenige, an dem der Behälter ganz gefüllt ist. Zur Durchführung des Abgleichs muß also der Behälter zunächst ganz entleert und dann ganz gefüllt werden. Dies ist sehr aufwendig, zeitraubend und störend, weil in den laufenden Produktionsprozeß eingegriffen wird.

Aufgabe der Erfindung ist die Schaffung eines Verfahrens zum Abgleich bei einer Füllstandsmessung der eingangs angegebenen Art, das einen Abgleich an einem einzigen Abgleichpunkt ohne Änderung der Befüllung des Behälters ermöglicht.

Die Lösung dieser Aufgabe erfolgt nach der Erfindung durch die folgenden Verfahrensschritte:

a) eine laufende Befüllung oder Entleerung des Behälters wird unterbrochen;
b) das aktuelle Füllgutvolumen wird festgehalten;
c) mit dem abzugleichenden Sensor wird eine Abstandsmessung durchgeführt;
d) das aktuelle Füllgutvolumen wird in die Auswerteeinrichtung eingegeben;
e) die Auswerteeinrichtung bestimmt auf Grund des gespeicherten Zusammenhangs zwischen Füllhöhe und Füllgutvolumen die zu dem eingegebenen Füllgutvolumen gehörige Füllhöhe und berechnet die Leerdistanz als Summe aus dieser Füllhöhe und dem gemessenen Abstand.

Bei dem erfindungsgemäßen Verfahren erfolgt der Abgleich an dem Punkt, der im laufenden Produktionsprozeß gerade erreicht ist, und nach der Beendigung des Abgleichs kann der Produktionsprozeß an diesem Punkt fortgesetzt werden. Dazwischen erfolgt keine Änderung der Befüllung des Behälters. Der Zeitbedarf für die Durchführung des Abgleichs ist daher gering, und es entfällt auch der Aufwand für Ausweichbehälter und zusätzliche Meßeinrichtungen. Das Verfahren ist bei Behältern beliebiger Form anwendbar, für die der Zusammenhang zwischen Füllhöhe und Füllgutvolumen in der Auswerteeinrichtung gespeichert ist. Das Verfahren muß lediglich als Algorithmus in der Auswerteeinrichtung vorhanden sein; weitere Voraussetzungen sind nicht erforderlich.

Eine andere Ausführungsform des erfindungsgemäßen Verfahrens dient zum Abgleich bei Behältern, von denen zwar bekannt ist, daß ein linearer Zusammenhang zwischen der Füllhöhe und dem Füllgutvolumen besteht, wobei aber die Steigung der linearen Kennlinie nicht bekannt ist. Dies ist der Fall bei Behältern mit über den ganzen Füllbereich konstantem horizontalem Querschnitt, also beispielsweise stehenden zylindrischen oder prismatischen Behältern, wenn die Grundfläche unbekannt ist. Auch bei solchen Behältern war bisher ein Abgleich an wenigstens zwei Punkten erforderlich, um die Steigung der Kennlinie zu ermitteln. Die Erfindung ermöglicht auch in diesem Fall den Abgleich an einem einzigen Abgleichpunkt ohne Änderung der Befüllung des Behälters durch die folgenden Verfahrensschritte:

a) eine laufende Befüllung oder Entleerung des Behälters wird unterbrochen;
b) das aktuelle Füllgutvolumen und die aktuelle Füllhöhe werden festgehalten;
c) mit dem abzugleichenden Sensor wird eine Abstandsmessung durchgeführt;
d) das aktuelle Füllgutvolumen und die aktuelle Füllhöhe werden in die Auswerteeinrichtung eingegeben;
e) die Auswerteeinrichtung berechnet die Steigung der linearen Kennlinie aus dein aktuellen Füllgutvolumen und der aktuellen Füllhöhe und die Leerdistanz als Summe der aktuellen Füllhöhe und des gemessenen Abstands.

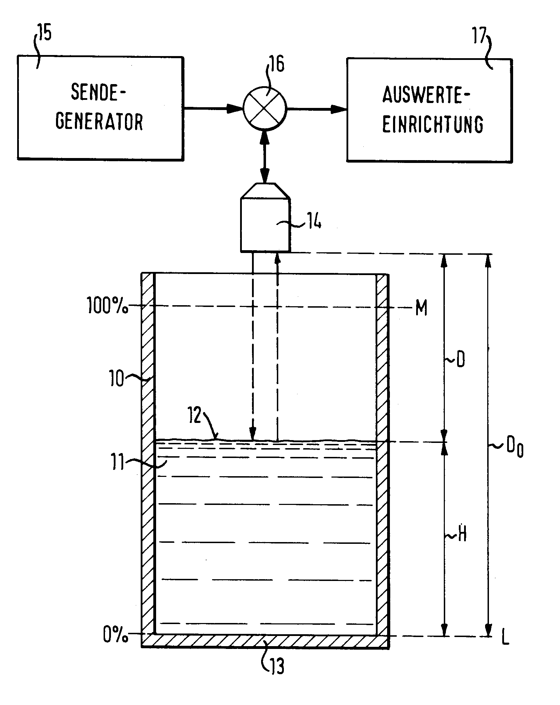

Weitere Merkmale und Vorteile ergeben sich aus der folgenden Beschreibung von Ausführungsbeispielen an Hand der einzigen Figur der Zeichnung, die schematisch die Messung des Füllstands in einem Behälter nach dem Rückstrahlprinzip zeigt.

Die Zeichnung zeigt einen Behälter 10, der ein Füllgut 11 enthält. Die Füllhöhe H im Behälter ist die Höhe der Oberfläche 12 des Füllguts 11 über dem Niveau L, das dem leeren Behälter entspricht. Bei dem in der Zeichnung dargestellten Beispiel eines Behälters 10 mit ebenem Boden 13 ist angenommen, daß das Niveau L der Oberfläche des Bodens 13 entspricht. Der Behälter 10 ist voll, wenn die Höhe der Oberfläche 12 des Füllguts ein Niveau M erreicht.

Die Füllstandsmessung erfolgt nach dem Rückstrahlprinzip mit Hilfe eines Sensors 14, der oberhalb des höchsten vorkommenden Füllstands montiert und so ausgebildet ist, daß er Wellen zur Oberfläche 13 des Füllguts 11 hin aussenden und die von dieser Oberfläche 13 reflektierten Echowellen empfangen kann. Die zur Füllstandsmessung verwendeten Wellen können Ultraschallwellen sein, wobei die Abstandsmessung wie bei einem Echolot nach dem Impulslaufzeitprinzip erfolgt. In diesem Fall ist der Sensor 14 ein Ultraschallwandler, der durch elektrische Wechselspannungsimpulse, die von einem Sendegenerator 15 über eine Sende-Empfangs-Weiche 16 geliefert werden, zur Aussendung von Ultraschallimpulsen angeregt wird und empfangene Ultraschallwellen in elektrische Empfangssignale umwandelt, die über die Sende-Empfangs-Weiche 16 einer Auswerteeinrichtung 17 zugeführt werden. Die zur Füllstandsmessung verwendeten Wellen können auch elektromagnetische Wellen sein, wobei die Abstandsmessung wie bei einem Impuls-Radar ebenfalls nach dem Impulslaufzeitprinzip erfolgen kann. In diesem Fall ist der Sensor 14 eine Antenne, die vom Sendegenerator 15 über die Sende-Empfangs-Weiche 16 gelieferte elektrische Hochfrequenzimpulse aussendet und empfangene Hochfrequenzsignale über die Sende-Empfangs-Weiche 16 zur Auswerteeinrichtung 17 überträgt. Bei Verwendung elektromagnetischer Wellen kann die Abstandsmessung auch wie bei einem Frequenzmodulations-Dauerstrichradar (FMCW-Radar) erfolgen; auch in diesem Fall ist der Sensor 14 eine Antenne, die jedoch eine vom Sendegenerator 14 gelieferte kontinuierliche Mikrowelle aussendet, die periodisch linear frequenzmoduliert ist, beispielsweise nach einer Sägezahnfunktion.

In jedem Fall wird in der Auswerteeinrichtung 17 die Laufzeit der Wellen vom Sensor 14 zu der Oberfläche 12 und zurück zum Sensor 14 ermittelt, die beim Impulslaufzeitprinzip gleich dem Zeitabstand zwischen der Aussendung eines Sendeimpulses und dem Empfang des an der Oberfläche 12 reflektierten Echoimpulses ist, während sie sich beim Frequenzmodulations-Dauerstrichradar aus der Frequenzdifferenz zwischen der Sendewelle und der empfangenen Echowelle ergibt. Aus der ermittelten Laufzeit und der bekannten Ausbreitungsgeschwindigkeit der verwendeten Wellen wird der Abstand D der Füllgutoberfläche 12 vom Sensor 14 berechnet. Wenn die Oberfläche 12 des Füllguts 11 auf dem Niveau L liegt, der Behälter also leer ist (Füllhöhe H = 0), ist der mit dem Sensor 14 gemessene Abstand die Leerdistanz $D_0$. Für jeden anderen gemessenen Abstand D ergibt sich die Füllhöhe H im Behälter 10 nach der Formel

$$H = D_0 - D.$$

Im allgemeinen interessiert den Anwender nicht die Füllhöhe H, sondern das Volumen V des Füllguts. Dieses Volumen ergibt sich aus der Füllhöhe H, wenn der Zusammenhang zwischen der Füllhöhe H und dem Füllgutvolumen V bekannt ist. Bei Behältern mit über den ganzen Füllbereich konstantem horizontalem Querschnitt, also beispielsweise zylindrischen und prismatischen (z.B. rechteckigen) stehenden Behältern, handelt es sich um einen einfachen linearen Zusammenhang: das Füllgutvolumen V ist der Füllhöhe H proportional. Bei anderen Behältern besteht ein nichtlinearer Zusammenhang zwischen der Füllhöhe H und dem Füllgutvolumen V, doch kann in den meisten Fällen das Füllgutvolumen V nach einer bekannten Formel aus der Füllhöhe H berechnet werden. Dies gilt beispielsweise für liegende zylindrische Behälter. Für ganz unregelmäßige Behälter kann der Zusammenhang zwischen der Füllhöhe H und dem Füllgutvolumen V experimentell ermittelt werden. Für jeden Behälter kann somit der Zusammenhang zwischen der Füllhöhe H und dem Füllgutvolumen V durch eine Formel, eine Kennlinie oder eine Tabelle angegeben werden.

Der Zusammenhang zwischen der Füllhöhe H und dem Füllgutvolumen V ist in Form einer Formel, einer Tabelle oder einer Kennlinie in der Auswerteeinrichtung 17 gespeichert. In der Auswerteeinrichtung 17 wird zu der ermittelten Füllhöhe H das Füllgutvolumen V nach der gespeicherten Formel berechnet oder aus der gespeicherten Kennlinie oder Tabelle entnommen und angezeigt. Die Anzeige kann in absoluten Maßeinheiten (z.B. Liter, Hektoliter, Kubikmeter) oder relativ in Prozenten zwischen 0% (leer) und 100% (voll) erfolgen. Dagegen bleiben dem Anwender der gemessene Abstand D und die daraus berechnete Füllhöhe H in der Regel unbekannt.

Beim ersten Einbau eines Sensors 14 muß ein Abgleich durchgeführt werden, damit für jeden mit dem Sensor gemessenen Abstand D das richtige Füllgutvolumen V angezeigt wird. Hierfür ist es üblich, den Abgleich an mindestens zwei verschiedenen Punkten vorzunehmen. Diese Punkte sind in der Regel derjenige, an dem der Behälter völlig entleert ist (0%) und derjenige, an dem der Behälter ganz gefüllt ist (100%). Hierzu muß also der Behälter ganz entleert und dann ganz gefüllt werden. Dies ist sehr aufwendig, zeitraubend und störend, weil in den laufenden Produktionsprozeß eingegriffen wird.

Mit dem nachfolgend beschriebenen Verfahren kann der Abgleich an einem einzigen Abgleichpunkt erfolgen, ohne daß Veränderungen am Befüllungszustand des Behälters erforderlich sind.

Hierzu wird in folgenden Schritten vorgegangen:

1. Eine laufende Befüllung oder Entleerung des Behälters wird unterbrochen.

2. Das aktuelle Füllgutvolumen $V_A$ wird festgehalten.

3. Mit dem abzugleichenden Sensor wird eine Abstandsmessung durchgeführt, die einen Abstand $D_A$ ergibt.

4. Das aktuelle Füllgutvolumen $V_A$ wird in die Auswerteeinrichtung eingegeben.

5. Die Auswerteeinrichtung bestimmt aufgrund des gespeicherten Zusammenhangs zwischen Füllhöhe und Füllgutvolumen die zu dem eingegebenen aktuellen Füllgutvolumen $V_A$ gehörige Füllhöhe $H_A$ und berechnet die Leerdistanz $D_0$ aus der Füllhöhe $H_A$ und dem gemessenen Abstand $D_A$:

$$D_0 = H_A + D_A,$$

die dann die Grundlage für die Messung bildet.

Damit ist der Abgleich beendet und die Befüllung oder Entleerung des Behälters kann wieder freigegeben werden. Die Auswerteeinrichtung zeigt jetzt laufend das richtige Füllgutvolumen an.

Mit diesem Verfahren erfolgt der Abgleich an einem einzigen Punkt, ohne daß eine Änderung des Füllgutvolumens erforderlich ist. Insbesondere entfällt die Notwendigkeit, den Behälter vollständig zu entleeren und dann vollständig zu füllen.

Eine Variante des beschriebenen Verfahrens ermöglicht den Abgleich bei einem Behälter, von dem zwar bekannt ist, daß ein linearer Zusammenhang zwischen der Füllhöhe H und dem Füllgutvolumen V besteht:

$$V = k \cdot H,$$

aber der Koeffizient k, also die Steigung der linearen Kennlinie, nicht bekannt ist. Dies ist der Fall bei Behältern mit über den ganzen Füllbereich konstantem horizontalem Querschnitt, also beispielsweise stehenden zylindrischen oder prismatischen Behältern, wenn die Grundfläche unbekannt ist. Der Abgleich erfolgt in diesem Fall in folgenden Schritten:

1. Eine laufende Befüllung oder Entleerung des Behälters wird unterbrochen.

2. Das aktuelle Füllgutvolumen $V_A$ und die zugehörige aktuelle Füllhöhe $H_A$ werden festgehalten.

3. Mit dem abzugleichenden Sensor wird eine Abstandsmessung durchgeführt, die einen Abstand $D_A$ ergibt.

4. Das aktuelle Füllgutvolumen $V_A$ und die zugehörige Füllhöhe $H_A$ werden in die Auswerteeinrichtung eingegeben. Die Auswerteeinrichtung berechnet aus den eingegebenen Werten die Steigung k der linearen Kennlinie

$$k = V_A/H_A$$

und aus der eingegebenen Füllhöhe $H_A$ und dem gemessenen Abstand $D_A$ die Leerdistanz $D_0$

$$D_0 = H_A + D_A.$$

Diese Werte bilden dann die Grundlage für die weitere Messung.

Damit ist der Abgleich beendet, und die Befüllung oder Entleerung des Behälters kann wieder freigegeben werden. Das Auswertesystem zeigt jetzt laufend das richtige Füllgutvolumen an.

Auch bei diesem Verfahren erfolgt der Abgleich an einem einzigen Punkt, ohne daß eine Änderung des Füllgutvolumens erforderlich ist. Insbesondere entfällt die Notwendigkeit, den Behälter vollständig zu entleeren und dann wieder vollständig zu füllen.

Die Erfindung ist nicht auf die Anwendung bei der zuvor als Beispiel beschriebenen Füllstandsmessung nach dem Rückstrahlprinzip beschränkt; sie eignet sich für alle Füllstandsmeßverfahren, bei denen der Abstand zwischen einem oberhalb des höchsten vorkommenden Füllstands angebrachten Sensor und der Füllgutoberfläche gemessen wird, wozu beispielsweise auch mechanische Geräte gehören.

**Patentansprüche**

1. Verfahren zum Abgleich bei der Füllstandsmessung mittels eines Sensors, der oberhalb des höchsten vorkommenden Füllstands angebracht ist und den Abstand zu der Oberfläche des Füllguts im Behälter mißt, und mittels einer Auswerteeinrichtung, die aus dem vom Sensor gemessenen Abstand und der Leerdistanz die Füllhöhe berechnet und aus dem in der Auswerteeinrichtung gespeicherten Zusammmenhang zwischen Füllhöhe und Füllgutvolumen das Füllgutvolumen bestimmt und anzeigt, gekennzeichnet durch die folgenden Verfahrensschritte:

a) eine laufende Befüllung oder Entleerung des Behälters wird unterbrochen;
b) das aktuelle Füllgutvolumen wird festgehalten;
c) mit dem abzugleichenden Sensor wird eine Abstandsmessung durchgeführt;
d) das aktuelle Füllgutvolumen wird in die Auswerteeinrichtung eingegeben;
e) die Auswerteeinrichtung bestimmt auf Grund des gespeicherten Zusammenhangs zwischen Füllhöhe und Füllgutvolumen die zu dem eingegebenen Füllgutvolumen gehörige Füllhöhe und berechnet die Leerdistanz als Sumne aus dieser Füllhöhe und dem gemessenen Abstand.

2.   Verfahren zum Abgleich bei der Füllstandsmessung mittels eines Sensors, der oberhalb des höchsten vorkommenden Füllstands angebracht ist und den Abstand zu der Oberfläche des Füllguts im Behälter mißt, und mittels einer Auswerteeinrichtung, die aus dem vom Sensor gemessenen Abstand und der Leerdistanz die Füllhöhe berechnet und aus dem in der Auswerteeinrichtung gespeicherten Zusammenhang zwischen Füllhöhe und Füllgutvolumen das Füllgutvolumen bestimmt und anzeigt, dadurch gekennzeichnet, daß bei linearem Zusammenhang zwischen Füllhöhe und Füllgutvolumen und bei unbekannter Steigung der diesen linearen Zusammenhang darstellenden linearen Kennlinie die folgenden Verfahrensschritte durchgeführt werden:

> a) eine laufende Befüllung oder Entleerung des Behälters wird unterbrochen;
> b) das aktuelle Füllgutvolumen und die aktuelle Füllhöhe werden festgehalten;
> c) mit dem abzugleichenden Sensor wird eine Abstandsmessung durchgeführt;
> d) das aktuelle Füllgutvolumen und die aktuelle Füllhöhe werden in die Auswerteeinrichtung eingegeben;
> e) die Auswerteeinrichtung berechnet die Steigung der linearen Kennlinie aus dem aktuellen Füllgutvolumen und der aktuellen Füllhöhe und die Leerdistanz als Summe der aktuellen Füllhöhe und des gemessenen Abstands.

Europäisches
Patentamt

# EUROPÄISCHER RECHERCHENBERICHT

Nummer der Anmeldung

EP 95 11 6970

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US-A-4 853 694 (TOMECEK)<br>* Spalte 4, Zeile 64 - Spalte 6, Zeile 16 *<br>* Spalte 7, Zeile 63 - Spalte 10, Zeile 7 *<br>--- | 1,2 | G01F25/00<br>G01F23/296<br>G01F23/284 |
| A | SCHIFF UND HAFEN,<br>Bd. 38, Nr. 11, Oktober 1986 HAMBURG  DE,<br>Seite 89  'Neuartiger<br>Flüssigkeits-Niveauanzeiger'<br>* mittlere Spalte, Absatz 2; Abbildung *<br>--- | 1,2 | |
| A | EP-A-0 668 488 (ENDRESS UND HAUSER)<br>* Spalte 12, Zeile 31 - Spalte 14, Zeile 41; Abbildung 1 *<br>--- | 1,2 | |
| A | EP-A-0 591 816 (KROHNE)<br>* Seite 4, Zeile 53 - Zeile 57; Abbildung 2 *<br>--- | 1,2 | |
| A | WO-A-92 15847 (SELI HUGONNET)<br>* Seite 8, Zeile 26 - Seite 9, Zeile 23; Abbildung 5 *<br>----- | 1,2 | **RECHERCHIERTE SACHGEBIETE (Int.Cl.6)**<br><br>G01F |

Der vorliegende Recherchenbericht wurde für alle Patentansprüche erstellt

| Recherchenort | Abschlußdatum der Recherche | Prüfer |
|---|---|---|
| DEN HAAG | 2.April 1996 | Pflugfelder, G |